Europäisches Patentamt

European Patent Office

Office européen des brevets

(19)

(11) Veröffentlichungsnummer : **0 377 890 B1**

(12) **EUROPÄISCHE PATENTSCHRIFT**

(45) Veröffentlichungstag der Patentschrift :
**06.05.92 Patentblatt 92/19**

(51) Int. Cl.⁵ : **C08L 25/06, C08F 279/02,**
**// (C08L25/06, 51:04)**

(21) Anmeldenummer : **89123880.0**

(22) Anmeldetag : **23.12.89**

(54) **Schlagfeste thermoplastische Formmasse und deren Verwendung.**

(30) Priorität : **31.12.88 DE 3844490**

(43) Veröffentlichungstag der Anmeldung :
**18.07.90 Patentblatt 90/29**

(45) Bekanntmachung des Hinweises auf die
Patenterteilung :
**06.05.92 Patentblatt 92/19**

(84) Benannte Vertragsstaaten :
**BE DE FR GB IT NL**

(56) Entgegenhaltungen :
**DE-B- 2 525 019**

(73) Patentinhaber : **BASF Aktiengesellschaft**
**Carl-Bosch-Strasse 38**
**W-6700 Ludwigshafen (DE)**

(72) Erfinder : **Schwaben, Hans-Dieter, Dr.**
**Lindenstrasse 6a**
**W-6721 Freisbach (DE)**
Erfinder : **Schlichtmann, Rainer**
**Buergermeister-Horlacher-Strasse 60**
**W-6700 Ludwigshafen (DE)**
Erfinder : **Kindler, Hubert, Dr.**
**Westring 19**
**W-6700 Ludwigshafen (DE)**
Erfinder : **Klaerner, Peter, Dr.**
**Hauptstrasse 62**
**W-6719 Battenberg (DE)**
Erfinder : **Mittnacht, Hans, Dr.**
**Zinkgraefstrasse 44**
**W-6940 Weinheim (DE)**

EP 0 377 890 B1

Jouve, 18, rue Saint-Denis, 75001 PARIS

## Beschreibung

Die Erfindung betrifft eine schlagfeste thermoplastische Formmasse, die enthält, jeweils bezogen auf A + B

80 bis 50 Gew.% einer Hartmatrix A aus Polystyrol mit einem Molekulargewicht $\overline{M}_n$ zwischen 150 000 und 200 000

und

50 bis 20 Gew.% einer gleichmäßig in der Hartmatrix verteilten Weichphase B, die einen mittleren Teilchendurchmesser $d_{50}$ (Volumenmittel) von 1 bis 10 μm aufweist,

wie sie erhalten wird durch Polymerisation von Styrol in Gegenwart einer gelösten elastomeren Pfropfgrundlage.

Zum Stand der Technik werden genannt:

(1) DE-OS 1 769 118

(2) DE-OS 1 770 392

(3) DE-AS 25 25 019

Aus (1) sind Formmassen bekannt, deren Weichphase aus Zellenteilchen unterschiedlicher Größe besteht.

In (2) ist ein Verfahren zur Herstellung solcher thermoplastischer 2-phasiger Formmassen mit einer Zellenteilchenmorphologie beschrieben.

Weiterhin ist bekannt, daß Formmassen, wie sie in (1) und (3) beschrieben sind, zwar schlagzäh sind, daß aber ihre Steifigkeit durch die Schlagzähmodifizierung deutlich erniedrigt wird. Daher müssen derartige Formmassen, wenn sie z.B. im Verpackungssektor eingesetzt werden, mit steiferem Polystyrol gemischt werden, damit die Steifigkeit und damit die Formstabilität der Fertigprodukte ausreichend ist.

Aufgabe der vorliegenden Erfindung war es daher, Formmassen mit höherer Zähigkeit und Steifigkeit zu finden und herzustellen, die eine bessere Eignung zur Extrusion besitzen.

Diese Aufgabe wird gelöst durch eine schlagfeste thermoplastische Formmasse der eingangs genannten Art, bei der das Molekulargewicht der Pfropfäste das 1,1- bis 1,35-fache des Molekulargewichts der Hartmatrix beträgt und die Pfropfzahl zwischen 50 und 100 % liegt.

Die erfindungsgemäße Formmasse ist 2-phasig aufgebaut und enthält eine Hartmatrix A und eine Weichphase B. Während oder nach der Herstellung der Formmassen können übliche Zusatzstoffe zugesetzt werden.

Die Formmasse enthält folgende Anteile, bezogen auf A + B:

A: 80 bis 50 Gew.%, vorzugsweise 75 bis 55 Gew.%,

B: 20 bis 50 Gew.%, vorzugsweise 25 bis 45 Gew.%.

Bezogen auf 100 Gew.-Teile A + B können Zusatzstoffe in einer Menge von 0,5 bis 25 Gew.-Teilen, vorzugsweise 1 bis 20 Gew.-Teilen, bezogen auf die fertige Masse zugegen sein.

Komponente A

Die Hartmatrix der erfindungsgemäßen Formmasse ist aus Polystyrol aufgebaut. Das Molekulargewicht der Hartmatrix ($\overline{M}_n$) liegt im Bereich zwischen 150 000 und 200 000, besonders bevorzugt zwischen 160 000 und 190 0000. Die Herstellung derartiger Polystyrole (auch in Gegenwart von Kautschuk) ist dem Fachmann bekannt. Hinzuweisen ist darauf, daß zu der Hartmatrix weder das in der Weichphase occludierte Polystyrol noch der gepfropfte Anteil des Polystyrols zu rechnen ist.

Komponente B

Die erfindungsgemäße Formmasse weist als Komponente B eine Weichphase auf, die fein dispergiert in der Hartmatrix vorhanden ist. Die Gegenwart der Weichphase kann z.B. durch eine elektronenmikroskopische Aufnahme der Formmasse nachgewiesen werden. Der Anteil der Weichphase wird durch Bestimmung des Gelgehalts ermittelt. Bei der Weichphase handelt es sich um ein Pfropfmischpolymerisat des Monomeren der Hartmatrix auf ein Elastomeres (Kautschuk) als Pfropfgrundlage. Die Herstellung und Dispergierung einer derartigen Weichphase ist bekannt.

Als Elastomeres (Kautschuk) werden die üblicherweise für die Schlagfestmodifizierung von Styrolpolymerisaten gebräuchlichen natürlichen und synthetischen Kautschuke eingesetzt. Im Sinne der Erfindung geeignet sind Polybutadiene, Polyisoprene und Mischpolymerisate des Butadiens und/oder des Isoprens mit Styrol, die eine Glastemperatur unterhalb von -20°C besitzen.

Die Mischpolymerisate des Butadiens oder des Isoprens mit Styrol können die Monomeren sowohl in statistischer Verteilung als auch blockförmig eingebaut erhalten. Besonders bevorzugt sind Polybutadiene mit 30 bis 99 % cis-1,4-Einheiten.

Bei der Herstellung der Weichphase B wird das Elastomere in einer Menge von 4 bis 12 Gew.-% vorzugsweise von 6 bis 12 Gew.-% bezogen auf das Monomeren a (den Reaktionsansatz) angewendet, wobei im Bedarfsfall ein Lösungsmittel und Hilfsstoffe, wie Regler, Gleitmittel etc. mitverwendet werden.

Das mittlere Molekulargewicht der Elastomeren liegt im Bereich von 50.000 bis 400.000, insbesondere von 200 000 bis 300 000 (Gew.-Mittel). Die Teilchen der Weichphase bestehen aus Zellenteilchen, die einen mittleren Teilchendurchmesser, $d_{50}$-Wert (Volumenmittel aus Bildanalyse) von 1 bis 10 µm, vorzugsweise von 1,5 bis 8 µm, insbesondere 2 bis 6 µm aufweisen. Das in der Weichphase occludierte und gepfropfte Polystyrol wird der Weichphase zugerechnet.

Komponente C

Unter Zusatzstoffen werden z.B. die für die Herstellung von Formmassen üblichen Hilfsmitteln, wie Mineralöle, übliche Ester von aromatischen oder aliphatischen Carbonsäuren mit aliphatischen Alkoholen, Polyalkylenoxide auf Basis von Ethylenoxid und/oder Propylenoxid, Molekulargewichtsregler, Schutzkolloide oder Antioxidantien verstanden.

Als Hilfsmittel seien ferner genannt Gleitmittel, wie Zinkstearat, Farbstoffe, Stabilisatoren, evtl. Flammschutzmittel in üblichen Mengen. Die erfindungsgemäßen Formmassen sind geeignet für die Verwendung zur Herstellung von Formteilen.

Herstellung der erfindungsgemäßen Formmasse

Die Herstellung der erfindungsgemäßen Formmassen erfolgt durch Polymerisation von Styrol in Gegenwart des Kautschuks, wobei der Kautschuk zunächst im monomeren Styrol gelöst und diese Ausgangslösung dann unter Rühren polymerisiert wird. Bei einer solchen Polymerisation spricht man von einer Masse-Polymerisation.

Dem Reaktionsgemisch kann bis zu 25 Gew.-% bezogen auf die Monomerenmischung, eines indifferenten Lösungsmittels zugegeben werden. Geeignet sind hierfür beispielsweise aromatische Kohlenwasserstoffe wie Toluol, Ethylbenzol oder Xylol. Bevorzugt ist Ethylbenzol. Bei einer solchen Polymerisation spricht man von einer Lösungspolymerisation.

Die dritte Möglichkeit ist die Polymerisation zunächst in Masse und dann in wäßriger Suspension. Hierzu wird die Lösung des Kautschuks im Monomeren bis zu einem Umsatz von ca. 35 % in Masse unter Rühren vorpolymerisiert, dann in Wasser suspendiert und anschließend auspolymerisiert.

Die erfindungsgemäßen Formmassen werden in Gegenwart von polymerisationsbeeinflussenden Additiven hergestellt.

Als Kettenüberträger können die üblicherweise verwendeten Merkaptane mit 4 bis 18 C-Atomen eingesetzt werden. Besonders bewährt haben sich das n-Butyl-, das n-Octyl- sowie das n- und t-Dodecylmerkaptan. Diese Merkaptane werden in Mengen von 0,01 bis 0,3 Gew.% bezogen auf das Styrol, eingesetzt.

Als Polymerisationsauslöser (Initiatoren) werden organische Peroxide eingesetzt.

Als solche Initiatoren kommen Alkyl- oder Acylperoxide, Hydroperoxide, Perester oder Peroxicarbonate in Betracht. Vorzugsweise verwendet man pfropfaktive Initiatoren wie Dibenzoylperoxid, t-Butylperoxi-2-ethylhexanoat, t-Butylperbenzoat, 1,1-Di-(t-butylperoxy)cyclohexan, 1,1,-Di(t-butylperoxy)-3,3,5-trimethylcyclohexan. Die Initiatoren werden in einer Menge von 0,005 bis 0,2 Gew.-%, bezogen auf die Monomeren, eingesetzt. Die Wirkung der Initiatoren kann durch Zusätze wie Amine oder bevorzugt durch die Temperatur beeinflußt werden.

In allen Fällen wird in der Regel in einem Temperaturbereich von 50 bis 200°C, vorzugsweise 80 bis 200°C polymerisiert.

Die Polymerisation kann kontinuierlich oder absatzweise durchgeführt werden.

Das kontinuierliche Verfahren ist z.B. in der DE-A-17 70 392, das absatzweise in der DE-A-26 13 352 hinreichend beschrieben.

Wenn die Masse ganz durchpolymerisiert ist, dann ist eine Hartmatrix aus Polystyrol mit einer darin eingelagerten Weichphase entstanden.

Unter Weichphase (Gelgehalt) wird hier der bei Raumtemperatur (23°C) in Toluol unlösliche Anteil des schlagfest modifizierten Polymerisats abzüglich etwaiger Pigmente verstanden. Diese Weichphase ist heterogen aufgebaut und wird während des Herstellungsprozesses gebildet. Ihre Menge und ihr Zerteilungsgrad wird durch die Verfahrensbedingungen beeinflußt.

Die zu polymerisierende Kautschuklösung trennt sich kurz nach Beginn der Polymerisation in zwei Phasen, von denen zunächst die Lösung des Kautschuks im Monomeren die Kohärente bildet, während die zweite, eine Lösung des Homopolymerisats im Monomeren, in der ersten suspendiert bleibt. Sei steigendem Umsatz vermehrt sich unter Monomerenverbrauch die zweite Phase; dabei tritt dann ein Wechsel der Phasenkohärenz auf.

Neben diesem Vorgang läuft eine Pfropfreaktion ab, bei der Pfropfäste bestehend aus Polystyrol mit den Kautschukmolekülen chemisch verknüpft werden. Dieser Vorgang ist bekannt und z.B. bei Fischer, Angew. Makromol. Chem. 33, S. 35 - 74 (1973), ausführlich beschrieben.

Die in den Beispielen und Vergleichsversuchen beschriebenen bzw. erfindungsgemäßen Parameter wurden wie folgt bestimmt:

1. Als Molekulargewicht wird das Viskositätsmittel des Molekulargewichts $\overline{M}_\eta$ angegeben. Dieses errechnet sich aus der Viskositätszahl (VZ) nach Umrechnung in die Grenzviskosität nach Schulz-Blaschke mittels der Mark-Houwink-Gleichung für Polystyrol (s. J. W. Breitenbach et al., Makromolekulare Chemie 81, S. 32 ff, 1964).

2. Die Streckspannung [N/mm²], Reißfestigkeit [N/mm²] und Reißdehnung [%] werden nach DIN 53 455 in einem Zugversuch bestimmt. Die hierzu nötigen Probekörper werden bei T = 200°C gepreßt.

3. Die Masse an Polybutadien kann durch die Bestimmung der Jodzahl erhalten werden.

4. Die Viskositätszahl, VZ der Hartmatrix in [ml/g] wird analog DIN 53 724 bestimmt (0,5 %ige Lösung in Toluol bei 23°C). Zur Bestimmung der VZ der Hartmatrix muß diese von der Weichphase getrennt werden. Dazu werden 5 g der Formmasse in 50 ml Methylethylketon gelöst und mit 50 ml Dimethylketon versetzt. Man zentrifugiert bis die überstehende Lösung klar ist. Diese wird dekantiert und das darin enthaltene Matrixpolystyrol durch Ausfällen in der 10-fachen Menge an Methanol und anschließende Trocknung isoliert.

5. Zur Bestimmung der Viskositätszahl der Pfropfäste der Weichphase und der Pfropfzahl wird folgendes Verfahren verwendet:

Die trübe Phase aus der vorstehend beschriebenen Zentrifugentrennung wird schonend getrocknet (40°C; $10^{-2}$ mbar, 3 h), genau gewogen, anschließend in 50 ml Methylethylketon gelöst und mit 50 ml Dimethylketon versetzt, zentrifugiert, abgetrennt und erneut schonend getrocknet. Dieser Vorgang muß bis zur Gewichtskonstanz (in der Regel viermal) wiederholt werden.

Ist Gewichtskonstanz erreicht, wird wie folgt verfahren:

Ca. 1,5 g Weichphase werden in 80 ml Chlorbenzol gegeben und 30 Minuten lang auf 90°C erhitzt. Nach dem Abkühlen auf 60°C werden 1 ml Benzaldehyd, 2 ml t-Butylhydroperoxid (75 %) und 0,1 ml 0,003 molare Osmiumtetroxidlösung in Chlorbenzol zugegeben. Danach wird 10 Minuten lang auf 70°C erhitzt. Nach Abkühlen auf 60°C wird durch Eingießen in 600 ml Methanol (angesäuert mit einem Tropfen HCl) ausgefällt. Der Niederschlag wird nach 12-stündigem Stehen bei 20°C quantitativ vom Lösungsmittel getrennt und bei 40°C und $10^{-2}$ mbar bis zur Gewichtskonstanz getrocknet.

Danach wird in Methylethylketon gelöst und anschließend mit Dimethylketon versetzt. Dann wird zentrifugiert bis eine vollkommen klare überstehende Lösung vorhanden ist, dekantiert und das im überstand enthaltene Polystyrol durch Ausfällen in der 10-fachen Menge Methanol und anschließender Trocknung isoliert und diese - im folgenden als MEK-DMK bezeichnete Behandlung - mindestens einmal wiederholt. Anschließend wird die Behandlung mit $OsO_4$ wiederholt. Daran schließt sich dann erneut eine mindestens zweifach durchgeführte MEK-DMK-Trennung an; sie muß nach jeder $OsO_4$-Behandlung bis zur Gewichtskonstanz der Weichphase durchgeführt werden. Als Kontrolle dient hierbei, daß bei dem Eingießen der MEK-DMK-Lösung in das Methanol keine Trübung mehr auftritt.

Die $OsO_4$-Behandlung - MEK-DMK-Trennung muß insgesamt dreimal wiederholt werden.

Daran anschließend wird die noch verbliebene Weichphase in 80 ml Chlorbenzol gegeben und ca. 30 Minuten lang auf 90°C erhitzt. Nach dem Abkühlen auf 60°C werden 1 ml Benzaldehyd, 2 ml t-Butylhydroperoxid (75 %) und 0,1 ml 0,003 molare Osmiumtetroxidlösung in Chlorbenzol zugegeben. Diese Lösung wird dann 15 Minuten lang auf 85°C erhitzt. Nach Abkühlen auf 60°C wird durch Eingießen in 600 ml Methanol (angesäuert mit einem Tropfen HCl) ausgefällt. Der Niederschlag wird nach 12-stündigem Stehen bei 20°C quantitativ vom Lösungsmittel getrennt und bei 40°C und $10^{-2}$ mbar bis zur Gewichtskonstanz getrocknet. Hieran schließt sich dann die MEK-DMK-Trennung an, die erneut bis zum Erreichen der Gewichtskonstanz durchzuführen ist.

Die $OsO_4$-Behandlung - MEK-DMK-Trennung muß insgesamt dreimal wiederholt werden.

Dann wird die noch verbliebene Weichphase genau ausgewogen. Diese Masse wird als $M_1$ bezeichnet. Sie wird dann in 80 ml Chlorbenzol gegeben und unter Rückfluß 30 Minuten lang gekocht. Nach dem Abkühlen unter 80°C werden 10 ml Benzaldehyd, 20 ml t-Butylhydroperoxid (75 %) und 2 ml 0,003 molare Osmiumtetroxidlösung in Chlorbenzol zugegeben. Danach wird die Lösung 20 Minuten unter Rückfluß gekocht. Nach Abkühlen auf 60°C wird das gepfropfte Polystyrol durch Eingießen in 600 ml Methanol (angesäuert mit einem Tropfen HCl) ausgefällt. Der Niederschlag wird nach 12-stündigem Stehen bei 20°C über eine D4-Fritte abgesaugt und bei 80°C bei $10^{-2}$ mbar bis zur Gewichtskonstanz getrocknet (Masse $M_2$). Ob es sich hierbei ausschließlich um Polystyrol handelt, muß durch Messung von z.B. des Brechungsindex überprüft werden. Sollte sich dabei ergeben, daß im Polystyrol noch Polybutadienreste vorhanden sind, so muß die zuletzt beschriebene $OsO_4$-Behandlung nochmal durchgeführt werden. In der Regel ist aber die beschriebene Durchführung ausreichend. Von dem getrockneten gepfropften Polystyrol wird dann die Viskositätszahl ermittelt.

Die Pfropfzahl errechnet sich wie folgt:

$$\text{Pfropfzahl} = \frac{M_2}{M_1 - M_2} \cdot 100 \ [\%]$$

6. Die Lochkerbschlagzähigkeit a in $kJ/m^2$ wird nach DIN 53 753 bestimmt. Die dazu nötigen Probekörper werden bei T = 200°C gepreßt.

7. Zur Bestimmung der Teilchengröße und Verteilung der Weichphase wurden von den Produkten der Beispiele und von Vergleichsproben in bekannter Weise elektronenmikroskopische Dünnschichtaufnahmen angefertigt.

Die Bestimmung geschieht mit Hilfe der Bildanalyse nach dem Verfahren, wie es von W. Alex, Zeitschrift für Aufbereitung und Verfahrenstechnik 13, (1972) im Kap. 3.11 beschrieben ist. Die Zahl der ausgewerteten Teilchen lag zwischen 1500 und 6000.

Bei der Angabe der mittleren Teilchengröße handelt es sich in allen Fällen um das Volumenmittel der Teilchengröße. Die Bildanalyse liefert die integrale Volumenverteilung des Teilchendurchmesser einer Probe.

Hieraus läßt sich entnehmen, wieviel Volumenprozent der Teilchen einen Durchmesser gleich oder kleiner einer bestimmten Größe haben. Der mittlere Teilchendurchmesser der auch als $d_{50}$-Wert der integralen Volumenverteilung bezeichnet wird, ist dabei als der Teilchendurchmesser definiert, bei dem 50 Vol.-% der Teilchen einen größeren Durchmesser aufweisen als dem $d_{50}$-Wert entspricht.

Für die Beispiele und für Vergleichszwecke wurde als Kautschuk (elastomere Pfropfgrundlage) ein Handelsprodukt, ®Buna HX 529 C der Firma Bayer AG, verwendet. Es handelt sich nach Angaben des Herstellers um ein Homopolybutadien mit einem mittleren Molekulargewicht von 295 000 (Gewichtsmittel) und einem Gehalt von 37 % an cis-Struktureinheiten.

Die in den nachfolgenden Beispielen und Vergleichsversuchen angegebenen Mengen in Prozenten beziehen sich auf das Gewicht.

Beispiel 1

In einer kontinuierlich betriebenen Reaktorkaskade aus zwei in Serie geschalteten Rührkesseln und zwei Reaktionstürmen (Rohrreaktoren), wird eine Lösung aus 6,4 % Polybutadien (Lösungsviskosität 165 mPa.s; 5 %ig in Toluol), 5 % EB, 85,2 % Styrol und 3,3 % eines medizinischen Weißöls sowie 0,1 Antioxidans (®Irganox 1076 der Fa. Ciby-Geigy AG, Basel) bei einem Durchsatz von 17 1/h bis zu einem Feststoffgehalt von 75 ± 1 Gew.-% polymerisiert.

Hierzu wurden 17 l/h der o.a Lösung zunächst auf T = 125°C erwärmt, mit 3,0 g/h 1,1-Di-t-butylperoxi-3,3,5-trimethylcyclohexan versetzt und in einem 12 1-Rührkessel bei T = 124°C bis zu einem Feststoffgehalt von 17 % polymerisiert. Der Kesselinhalt wurde kontinuierlich ausgetragen, mit 5,6 g/h t-Dodecylmerkaptan versetzt und einem 30 l-Rührkessel (Ankerrührer, 35 Upm) zugeführt. Dort wurde bei 129°C bis zum Feststoffgehalt von 27 % polymerisiert. Der Inhalt des zweiten Kessels wurde kontinuierlich ausgetragen und einem als 3. Reaktionsstufe dienenden 30 l-Turmreaktor zugeführt. In diesem Reaktor wurde bei steigenden Temperaturen zwischen 130 und 145°C bis zu einem Feststoffgehalt von 55 % polymerisiert und schließlich in einem zweiten nachgeschalteten Turmreaktor bei ansteigender Temperatur zwischen 137 und 156°C bis zu einem Feststoffgehalt von 75 % polymerisiert. Der Ablauf wird dann in einem Wärmetauscher auf 240°C erhitzt und in einen auf 3 mbar gehaltenen Behälter entspannt. Hier wurden das Lösungsmittel und nicht umgesetztes Monomeres abgezogen. Die Polymerschmelze wurde ausgetragen, granuliert und abgefüllt.

Beispiel 2

Auf die gleiche Art und Weise wie in Beispiel 1 beschrieben, mit den Unterschieden, daß im 1. Rührkessel der Feststoffgehalt bei 16 % lag und nach dem 1. Rührkessel nur 3,6 g t-Dodecylmerkaptan eingesetzt wurde, konnte eine Formmasse mit folgenden Charakteristika erhalten werden:

Die mittlere Teilchengröße lag bei 2,4 µm, das Molekulargewicht der Hartmatrix war 184 000 g/mol, das Molekulargewicht der Pfropfäste betrug 220 000 g/mol und die Pfropfzahl betrug 87 %.

Beispiel 3

Auf die gleiche Art und Weise wie in Beispiel 2 beschrieben, jedoch mit dem Unterschied, daß im 2. Rührkessel mit einer Drehzahl von 10 Upm gerührt wurde, wurde eine Formmasse erhalten, die eine mittlere Teilchengröße von 5 µm, ein Molekulargewicht der Hartmatrix von 182 000 g/mol, einem Molekulargewicht der Pfropfäste von 215 000 g/mol und die Pfropfzahl von 82 % aufwies.

Beispiel 4

Die Bedingungen entsprachen Beispiel 3. Nach dem 1. Rührkessel werden 1,7 g t-Dodecylmerkaptan zugesetzt. Die mittlere Teilchengröße lag bei 4,1 μm, das Molekulargewicht der Hartmatrix war 196 000 g/mol, das Molekulargewicht der Pfropfäste lag bei 217000 g/mol und die Pfropfzahl war 83 %.

Beispiel 5

Die Bedingungen entsprachen Beispiel 1. Das vorgewärmte Reaktionsgemisch war mit 1,5 g/h 1,1-Di-t-butylperoxi-3,3,5-trimethylcyclohexan versetzt und im 1. Reaktionskessel bei T = 127°C polymerisiert worden; die Reaktion im 2. Rührkessel wurde bei 133°C fortgesetzt.
Das Molekulargewicht der Hartmatrix war 158000 g/mol, der mittlere Teilchendurchmesser lag bei 4,6 μm, das Molekulargewicht der Pfropfäste bei 210000 g/mol und die Pfropfzahl bei 56 %.

Vergleichsversuch 1

Auf die gleiche Art und Weise wie in Beispiel 1 beschrieben, jedoch mit 12,0 g t-Dodecylmerkaptan, zugesetzt nach dem 1. Rührkessel, wird eine Formmasse erhalten, deren Matrixmolekulargewicht bei 139 000 g/mol liegt. Die Teilchengröße bei 3,9 μm, das Molekulargewicht der Pfropfäste bei 216000 g/mol und die Pfropfzahl bei 84 %.

Vergleichsversuch 2

Auf die gleiche Art und Weise wie in Beispiel 1 beschrieben, jedoch mit dem Unterschied, daß das t-Dodecylmerkaptan in den 1. Rührkessel gefahren wurde, konnte eine Formmasse erhalten werden, deren Matrixmolekulargewicht bei 162000 g/mol lag, Die mittlere Teilchengröße 3,8 μm, das Molekulargewicht der Pfropfäste 170000 g/mol und die Pfropfzahl 71 %.

Vergleichsversuch 3

Auf die gleiche Art und Weise wie in Beispiel 1 beschrieben, jedoch mit dem Unterschied, daß kein 1,1-Di-t-butylperoxy-3,3,5-trimethylcyclohexan eingesetzt wurde und eine Anhebung der Reaktionstemperatur auf Werte erfolgte, die die Beibehaltung der Feststoffgehalte in den einzelnen Reaktoren garantierte, wurde eine Formmasse mit einem Matrixmolekulargewicht von 163 000 g/mol erhalten. Das Molekulargewicht der Pfropfäste betrug 195 000 g/mol, die mittlere Teilchengröße lag bei 4,1 μm und die Pfropfung bei 27 %.

Vergleichsversuch 4

Auf die gleiche Art und Weise wie im Beispiel 1 beschrieben, jedoch mit dem Unterschied, daß im 2. Rührkessel eine Rührerdrehzahl von 200 Upm eingestellt wurde, wurde eine Formmasse erhalten, die eine mittlere Teilchengröße von 0,5 μm aufwies, eine Molekulargewicht der Matrix von 165 000 g/mol, ein Molekulargewicht der Pfropfäste von 216 000 g/mol besaßt und bei der eine Pfropfzahl von 82 % ermittelt wurde.

Tabelle 1

| | | Beispiel | | | | | Vergleichsversuch | | | |
|---|---|---|---|---|---|---|---|---|---|---|
| | | 1 | 2 | 3 | 4 | 5 | 1 | 2 | 3 | 4 |
| Polybutadien-gehalt | (%) | 8,0 | 8,0 | 8,0 | 8,0 | 8,0 | 8,0 | 8,0 | 8,0 | 8,0 |
| Streckspannung | (N/mm$^2$) | 16,2 | 17,4 | 13,7 | 14,5 | 14,0 | 15,0 | 15,1 | 14,4 | 27,3 |
| Reißfestigkeit | (N/mm$^2$) | 14,7 | 14,8 | 14,1 | 14,3 | 14,0 | 14,6 | 14,5 | 14,6 | 18,0 |
| Reißdehnung | (%) | 31 | 31 | 32 | 29 | 30 | 31 | 29 | 30 | 17 |
| $a_{kl}$ | (kJ/m$^2$) | 14,9 | 14,6 | 14,4 | 14,8 | 13,9 | 10,6 | 11,0 | 9,7 | 8,6 |
| $d_{50}$ | ($\mu$m) | 2,8 | 2,4 | 5 | 4,1 | 4,6 | 3,9 | 3,8 | 4,1 | 0,5 |
| $M_\eta$ (Matrix) | (g/mol) | 167000 | 184000 | 182000 | 196000 | 158000 | 139000 | 162000 | 163000 | 165000 |
| $M_\eta$ (Pfropfäste) | (g/mol) | 214000 | 220000 | 215000 | 217000 | 210000 | 216000 | 170000 | 195000 | 216000 |
| Pfropfzahl | (%) | 85 | 87 | 82 | 83 | 56 | 84 | 71 | 27 | 82 |

EP 0 377 890 B1

**Patentansprüche**

1. Schlagfeste thermoplastische Formmasse, enthaltend, jeweils bezogen auf A + B,

80 bis 50 Gew.% einer Hartmatrix A aus Polystyrol mit einem Molekulargewicht $\overline{M}_\eta$ zwischen 150 000 und 200 000 und

50 bis 20 Gew.% einer gleichmäßig in der Hartmatrix verteilten Weichphase B, die einen mittleren Teilchendurchmesser $d_{50}$ (Volumenmittel) von 1 bis 10μm aufweist,

wie sie erhalten wird durch Polymerisation von Styrol in Gegenwart einer kautschukartigen Pfropfgrundlage, dadurch gekennzeichnet, daß das Molekulargewicht der Pfropfäste das 1,1- bis 1.35-fache des Molekulargewichts der Hartmatrix beträgt und die Pfropfzahl zwischen 50 und 100 % liegt.

2. Schlagfeste thermoplastische Formmasse nach Anspruch 1, enthaltend außerdem übliche Zusatzstoffe in üblichen Mengen.

3. Formmasse nach Anspruch 1, dadurch gekennzeichnet, daß sie aufweist

75 bis 55 Gew.-% der Hartmatrix A und

45 bis 25 Gew.-%der Weichphase B.

4. Verwendung der Formmasse nach Anspruch 1 zur Herstellung von Formteilen.


**Revendications**

1. Masse à mouler thermoplastique résistante aux chocs, contenant, chaque fois par rapport à A + B

de 80 à 50% en poids d'une matrice dure A en polystyrène ayant un poids moléculaire $\overline{M}_\eta$ entre 150 000 et 200 000, et

de 50 à 20% en poids d'une phase molle B qui est répartie uniformément dans la matrice dure et qui présente un diamètre moyen de particules $d_{50}$ (moyenne volumique) de 1 à 10 μm,

telle qu'obtenue par polymérisation de styrène en présence d'une base de greffage caoutchouteuse, caractérisée en ce que le poids moléculaire des branches greffées s'élève à 1,1-1,35 fois le poids moléculaire de la matrice dure et en ce que l'indice de greffage se situe entre 50 et 100%.

2. Masse à mouler thermoplastique résistante aux chocs selon la revendication 1, contenant en outre des additifs usuels dans les quantités usuelles.

3. Masse à mouler selon la revendication 1, caractérisée en ce qu'elle comporte

de 75 à 55% en poids de la matrice dure A et

de 45 à 25% en poids de la phase molle B.

4. Utilisation de la masse à mouler selon la revendication 1 pour la fabrication de pièces moulées.


**Claims**

1. An impact-resistant thermoplastic molding material, containing, based in each case on A + B,

from 80 to 50% by weight of a hard matrix A of polystyrene having a molecular weight $M_\eta$ of from 150,000 to 200,000 and

from 50 to 20% by weight of a soft phase B which is uniformly distributed in the hard matrix and has a median particle diameter $d_{50}$ (volume average) of from 1 to 10 μm,

as obtained by polymerizing styrene in the presence of an elastomeric grafting base, wherein the molecular weight of the grafted branches is from 1.1 to 1.35 times the molecular weight of the hard matrix and the degree of grafting is from 50 to 100%.

2. An impact-resistant thermoplastic molding material as claimed in claim 1, also containing conventional additives in the usual amounts.

3. A molding material as claimed in claim 1, which has

from 75 to 55% by weight of the hard matrix A and

from 45 to 25% by weight of the soft phase B.

4. Use of a molding material as claimed in claim 1 for producing moldings.